**Europäisches Patentamt**

**European Patent Office**

**Office européen des brevets**

(11) Numéro de publication : **0 488 831 B1**

(12) **FASCICULE DE BREVET EUROPEEN**

(45) Date de publication du fascicule du brevet :
**13.04.94 Bulletin 94/15**

(51) Int. Cl.$^5$ : **F02D 19/12, F02M 43/00**

(21) Numéro de dépôt : **91402682.8**

(22) Date de dépôt : **08.10.91**

(54) **Procédé et dispositif d'introduction d'un additif en quantité dosée dans le circuit d'injection d'un moteur à allumage par compression.**

(30) Priorité : **30.11.90 FR 9015069**

(43) Date de publication de la demande :
**03.06.92 Bulletin 92/23**

(45) Mention de la délivrance du brevet :
**13.04.94 Bulletin 94/15**

(84) Etats contractants désignés :
**DE GB IT SE**

(56) Documents cités :
**EP-A- 0 282 819**
**EP-A- 0 418 601**
**DE-A- 3 504 699**
**DE-A- 3 508 577**
**GB-A- 2 062 755**
**US-A- 4 557 221**
**INGENIEURS DE L'AUTOMOBILE no. 648, 1 Mai 1989, BOULOGNE FR page 67; 'SOOT FILTER SYSTEM: WITH ADDITIVE IN FUEL'**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Follain, Luc**
**6, Square Gay-Lussac**
**F-78330 Fontenay le Fleury (FR)**

(74) Mandataire : **Pinchon, Odile et al**
**PSA Peugeot Citroen Département OPS/BPI**
**18, rue des Fauvelles**
**F-92250 La Garenne Colombes (FR)**

Jouve, 18, rue Saint-Denis, 75001 PARIS

## Description

L'invention concerne un procédé et un dispositif d'introduction d'un additif en quantité dosée dans le circuit d'injection d'un moteur à allumage par compression.

Les gaz d'échappement des moteurs Diesel qui utilisent du gazole comme carburant renferment à la fois des polluants gazeux tels que des hydrocarbures, des oxydes de l'azote et du monoxyde de carbone CO et des polluants solides qui sont principalement constitués par des particules de suies. Les normes anti-pollution appliquées aux moteurs Diesel vont nécessiter, dans un avenir plus ou moins proche, l'élimination pratiquement complète des émissions de particules de suies dans les gaz d'échappement de ces moteurs.

Pour assurer l'élimination de ces particules de suies, on est amené à effectuer un post-traitement des gaz d'échappement en utilisant un filtre à particules.

Un tel filtre est installé dans la ligne d'échappement du moteur et comporte des éléments de filtration en matière céramique poreuse qui sont traversés par les gaz d'échappement et qui permettent de retenir les particules solides en suspension dans ces gaz.

Au cours du fonctionnement du moteur, les éléments de filtration se chargent en particules de suies et se colmatent progressivement. Le décolmatage des éléments de filtration peut être obtenu en faisant brûler les suies déposées sur ces éléments, pendant le fonctionnement du moteur.

En présence d'oxygène, les suies brûlent à des températures de l'ordre de 550 à 600°C. De tels niveaux thermiques ne sont que rarement atteints par les gaz d'échappement d'un moteur Diesel d'un véhicule de tourisme. Il est donc nécessaire de favoriser le début de la régénération des éléments de filtration en ajoutant au carburant un additif permettant d'abaisser la température de régénération des suies.

Les additifs les plus couramment utilisés sont constitués par des composés organo-métalliques qui, mélangés dans des proportions déterminées au gazole, sont injectés dans la chambre de combustion, par la pompe d'injection, et se retrouvent dans les gaz d'échappement.

La présence de ces additifs dans le filtre à particules, en mélange intime avec les particules de suies, leur permet de jouer le rôle de catalyseur de la combustion des particules de suies et d'abaisser les températures d'inflammation des suies aux environs de 400 à 450°C.

Jusqu'ici, on a envisagé d'incorporer les additifs au gazole, à l'issue du processus industriel d'obtention du carburant, dans les usines pétrolières productrices. Le gazole renfermant les additifs de régénération des filtres à particules serait alors vendu à la pompe et constituerait un produit particulier, dans le cadre de la vente au détail des carburants.

On a également proposé plus récemment d'incorporer les additifs au carburant de manière automatique, à l'intérieur du réservoir du véhicule à l'issue de chacune des opérations de remplissage de ce réservoir. Le dosage des additifs est effectué de manière que la concentration du carburant en additif à l'intérieur du réservoir reste parfaitement constante. Cette concentration prédéterminée est fixée à une valeur telle que le carburant injecté dans les cylindres du moteur renferme constamment une quantité d'additif suffisante pour abaisser la température de recombustion des suies dans le filtre à particules du véhicule, jusqu'à un niveau assurant une combustion satisfaisante, même lorsque le niveau de charge du moteur est faible.

Les additifs qui sont constitués le plus souvent par des composés organo-métalliques sont transformés en oxydes métalliques dans la chambre de combustion des cylindres du moteur. Les particules d'oxyde métallique formées dans les chambres de combustion présentent une granulométrie telle qu'elles sont arrêtées par le filtre à particules dans lequel elles s'accumulent pendant le fonctionnement du moteur.

Dans le cas où la teneur en additif du carburant est maintenue à un niveau fixe, cette teneur doit permettre un fonctionnement satisfaisant du filtre à particules, lorsque le niveau de charge du moteur est faible et que les gaz d'échappement sont à basse température. La proportion d'additif dans le carburant est donc nettement excédentaire, lorsque le niveau de charge du moteur est élevé et que les gaz d'échappement sont à haute température.

On est donc amené à consommer des quantités d'additif supérieures aux quantités nécessaires pour obtenir un fonctionnement satisfaisant du filtre à particules. Cette consommation excessive d'additif se traduit par des frais d'entretien plus élevés du véhicule et surtout par un colmatage plus rapide du filtre à particules, par les oyxdes formés à partir des additifs.

Le document DE-A-3504699 propose un procédé et un dispositif d'introduction d'un additif en quantité dosée dans le circuit d'injection d'un moteur à allumage par compression d'un véhicule automobile, comportant une pompe d'injection de carburant dans les cylindres du moteur reliée à un réservoir de carburant par une conduite d'aspiration et, un moyen de réglage du niveau de charge du moteur, le dispositif étant intégré au véhicule et comportant un réservoir d'additif sous forme liquide, un moyen d'injection de l'additif dans la conduite d'aspiration reliée au réservoir d'additif et un boîtier électronique de calcul et de commande relié par un premier conducteur électrique au moyen de réglage du niveau de charge du moteur et par un second conducteur électrique à un moyen de commande d'admission d'additif dans le moyen d'injection, de manière à recevoir un signal représentatif du niveau de charge du moteur et à injecter de manière automatique, dans la conduite d'aspiration du circuit d'injection, des quantités d'additif déterminées en fonction du niveau de charge du moteur.

Le document DE-A-3508577 propose également un dispositif d'introduction d'un additif dans la conduite d'aspiration d'une pompe d'injection d'un moteur à allumage par compression, dans lequel une conduite de recirculation de carburant est reliée à une pompe à l'une de ses extrémités et à la conduite d'aspiration de la pompe à son autre extrémité, de manière à réintroduire dans la conduite d'aspiration les quantités excédentaires éventuelles de carburant et d'additif parvenant à la pompe qui ne sont pas injectées dans les cylindres du moteur.

Si ces dispositifs permettent, dans une certaine mesure, d'éviter une consommation excessive d'additif et de limiter le colmatage du filtre à particules utilisé sur le circuit d'échappement du moteur, par des produits de décomposition de l'additif, de manière à retarder ou à éviter des opérations d'entretien ou de changement du filtre, ils modifient constamment le dosage d'additif, à la moindre variation du niveau de charge du moteur.

Le but de l'invention est donc de proposer un procédé d'introduction d'un additif en quantité dosée dans le circuit d'injection d'un moteur à allumage par compression d'un véhicule automobile comportant une pompe d'injection de carburant dans les cylindres du moteur reliée à un réservoir de carburant par une conduite d'aspiration et un moyen de réglage du niveau de charge du moteur, procédé dans lequel, pendant le fonctionnement du moteur, on injecte de manière automatique, dans la conduite d'aspiration du circuit d'injection, des quantités d'additif déterminées en fonction du niveau de charge du moteur, permettant d'éviter une modification du dosage d'additif à la moindre variation du niveau de charge du moteur.

Dans ce but, on mesure en continu un paramètre représentatif du niveau de charge du moteur, on calcule la valeur moyenne du paramètre pendant un intervalle de temps élémentaire, on compare les valeurs moyennes calculées du paramètre pendant des intervalles de temps élémentaires successifs à au moins une valeur limite prédéterminée du paramètre et on injecte l'additif dans la conduite d'aspiration du circuit d'injection, à un débit déterminé en fonction du résultat de la comparaison.

L'invention est également relative à un dispositif d'introduction automatique d'un additif en quantité dosée dans le circuit d'injection d'un moteur à allumage par compression.

Afin de bien faire comprendre l'invention, on va maintenant décrire, à titre d'exemple non limitatif, en se référant aux figures jointes en annexe, un dispositif d'introduction d'un additif dans le circuit d'injection d'un moteur Diesel et l'utilisation de ce dispositif pour la mise en oeuvre du procédé suivant l'invention.

La figure 1 est une vue schématique montrant un dispositif d'introduction en quantité dosée d'un additif dans le circuit d'injection d'un moteur Diesel utilisé pour la propulsion d'un véhicule comportant une ligne d'échappement sur laquelle est intercalé un filtre à particules.

La figure 2 est un diagramme montrant les variations en fonction du temps d'un paramètre représentatif du niveau de charge du moteur.

La figure 3 est un diagramme montrant les variations en fonction du temps d'un paramètre représentatif du niveau de charge du moteur, de la quantité d'additif introduite dans le circuit d'injection et de la concentration en additif du carburant contenu dans la pompe d'injection.

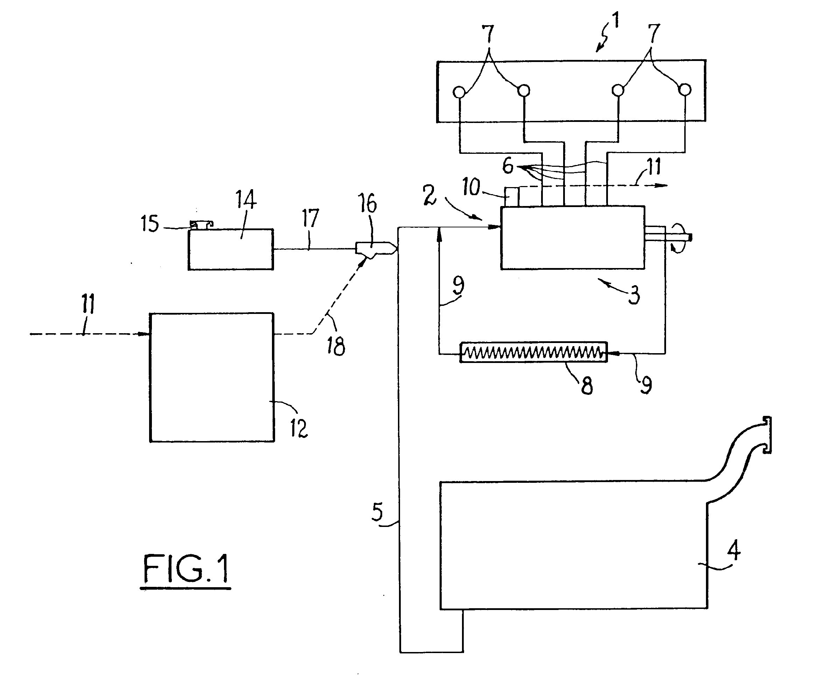

Sur la figure 1, on voit le moteur Diesel 1 d'un véhicule automobile qui est alimenté en gazole par l'intermédiaire d'un circuit d'injection désigné de manière générale par le repère 2 et comportant en particulier une pompe d'injection 3 dont la partie d'aspiration est reliée à un réservoir de gazole 4 par l'intermédiaire d'une conduite 5.

La partie de refoulement de la pompe 3 est reliée par des conduites 6 à des injecteurs 7 associés chacun à l'un des cylindres du moteur 1.

Du gazole pur contenu dans le réservoir 4 est aspiré par la pompe 3, par l'intermédiaire de la conduite d'aspiration 5 et injecté sous pression dans les conduites 6, pendant le fonctionnement du moteur. Le gazole sous pression est introduit dans les cylindres du moteur par l'intermédiaire des injecteurs 7.

Les quantités de gazole excédentaires qui sont aspirées par la pompe 3 et qui ne sont pas injectées dans le moteur peuvent être renvoyées dans la conduite d'aspiration 5, en amont de la pompe d'injection 3, par une conduite de recirculation 9 sur laquelle est placé un dispositif de refroidissement 8 du gazole remis en circulation.

Un moyen de réglage 10 du niveau de charge du moteur est associé à la pompe 3 et permet de régler le débit d'injection de la pompe en fonction du régime imposé au moteur par le conducteur du véhicule, depuis le poste de commande.

Le dispositif 10 est généralement constitué par un levier de charge dont la position peut être modifiée par le conducteur, par actionnement de la pédale d'accélérateur.

Un détecteur de position est associé au levier de charge 10, de manière à pouvoir transmettre un signal électrique représentatif de la position du levier de charge et donc du niveau de charge du moteur à un instant quelconque. De manière avantageuse, le détecteur de position associé au levier de charge 10 peut être constitué par un potentiomètre disposé dans un circuit de mesure de manière que la tension mesurée à ses bornes soit représentative de la position du levier de charge et donc du niveau de charge du moteur.

Le signal électrique représentatif de la position du levier de charge est transmis par un conducteur électrique 11 à un boîtier électronique 12 constituant un module de traitement et de commande du dispositif d'introduction d'additif en quantité dosée dans le circuit d'injection 2 du véhicule.

Le dispositif d'introduction d'additif dans le circuit d'injection 2 du véhicule qui est porté par la structure du véhicule comporte, en plus du boîtier électronique 12, un réservoir d'additif 14 muni d'un bouchon de remplissage 15 et un injecteur 16 débouchant dans la conduite d'aspiration 5 du circuit 2, en amont de la partie d'aspiration de la pompe d'injection 3 et de la conduite de recirculation 9.

L'injecteur 16 comporte un module de commande d'admission qui peut être constitué par une électrovanne permettant de régler le débit de la solution d'additif parvenant à l'injecteur 16 par l'intermédiaire de la conduite d'alimentation 17.

Le module de commande d'admission de l'injecteur 16 est relié par un conducteur électrique 18 au boîtier électronique 12 qui assure la commande de ce module d'admission en fonction du niveau de charge du moteur, de la manière qui sera décrite dans la suite du texte.

Le boîtier électronique 12 reçoit par l'intermédiaire du conducteur électrique 11 un signal représentatif du niveau de charge du moteur qui est traité par le module 12 et transformé en un signal de commande ; ce signal est transmis par le conducteur électrique 18 au module de commande d'admission de l'injecteur 16.

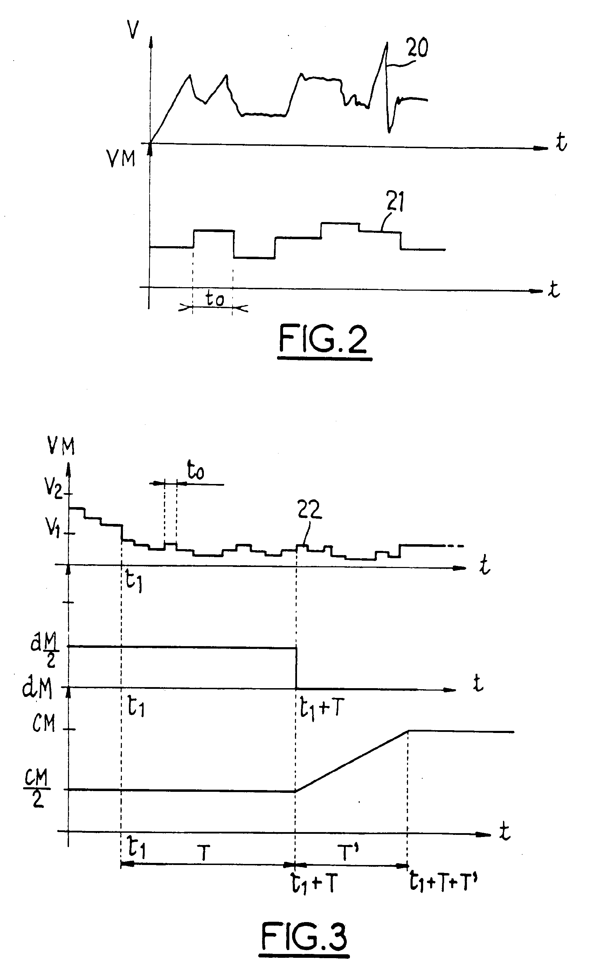

La partie supérieure de la figure 2 est un diagramme donnant les valeurs instantanées d'un signal représentatif du niveau de puissance du moteur, sous la forme de la tension V mesurée aux bornes d'un potentiomètre associé au levier de charge 10 de la pompe d'injection 3, pendant le fonctionnement du moteur.

Les valeurs de la tension V aux bornes du potentiomètre dont les variations au cours du temps sont représentées par la courbe 20 sont enregistrées dans une unité de mémoire du boîtier électronique 12.

Une unité de calcul du boîtier électronique 12 permet de calculer la valeur moyenne $V_m$ de la tension enregistrée pendant un intervalle de temps $t_0$.

Une courbe 21 représentative des variations de la valeur moyenne $V_m$ de la tension a été tracée sur le diagramme constituant la partie inférieure de la figure 2, en regard des valeurs de la tension instantanée V.

La partie supérieure de la figure 3 est un diagramme donnant les variations de la valeur moyenne $V_m$ de la tension, au cours d'une phase de fonctionnement du moteur pendant laquelle se produit un changement de régime du moteur correspondant à un changement des conditions d'utilisation du véhicule.

Les variations au cours du temps de la valeur moyenne $V_m$ de la tension sont représentées par la courbe 22.

On a porté sur le diagramme donnant les variations de $V_m$, les valeurs de la tension $V_1$ et $V_2$ qui correspondent à deux valeurs limites de la charge du moteur pour lesquelles on est amené à modifier le dosage de l'additif introduit dans le carburant.

Les valeurs $V_1$ et $V_2$ de la tension du potentiomètre du levier de charge 10 délimitent trois zones de charge dans lesquelles on adopte trois dosages différents de l'additif dans le carburant.

On a rassemblé dans le tableau donné ci-dessous les différentes conditions d'utilisation du véhicule propulsé par le moteur, les intervalles correspondants de la charge du moteur, les intervalles dans lesquels se situe la température des gaz d'échappement et le dosage d'additif adapté à ces différentes conditions d'utilisation.

| Utilisation du véhicule | Niveau de charge | Température des gaz d'échappement (°C) | Dosage débit d'additif |
|---|---|---|---|
| Ville | faible $0 \rightarrow V_1$ | $100 < T < 250$ | $d_M$ |
| Route | moyen $V_1 \rightarrow V_2$ | $250 < T < 450$ | $d_M/2$ |
| Autoroute | fort $V_2 \rightarrow$ pleine charge | $450 < T < 750$ | 0 |

Dans le cas d'une utilisation d'un véhicule pour laquelle le niveau de charge du moteur est faible, par exemple dans le cas où le véhicule circule en zone urbaine, la charge du moteur se traduisant par une tension aux bornes du potentiomètre associé au levier de charge inférieur à $V_1$, la température des gaz d'échappement est peu élevée, cette température étant par exemple comprise entre 100 et 250°C. Dans ce cas, il est nécessaire d'ajouter au carburant une forte quantité d'additif afin d'abaisser fortement la température de recombustion des suies dans le filtre à particules du véhicule, cette température de recombustion en l'absence d'additif étant de l'ordre de 550 à 600°C. Le dosage d'additif est alors effectué à un débit maximal $d_M$.

Lorsque le véhicule est utilisé sur route à vitesse modérée, le niveau de charge du moteur se trouve dans un intervalle moyen, la tension mesurée aux bornes du potentiomètre étant comprise entre la valeur $V_1$ et une valeur $V_2$ au-dessus de laquelle la charge du moteur est considérée comme forte. Les gaz d'échappement sont à une température qui peut être comprise entre 250 et 450°C, ce qui nécessite un dosage d'additif de recombustion des suies à un débit nettement inférieur au débit maximal $d_M$. Cette valeur a été établie à la valeur $d_M/2$ dans le cas d'une application pratique du procédé suivant l'invention.

Dans le cas d'une utilisation du véhicule en circulation à grande vitesse, par exemple sur autoroute, le niveau de charge du moteur est élevé, ce niveau de charge se traduisant par une tension aux bornes du potentiomètre du levier de charge comprise entre la valeur $V_2$ et une valeur supérieure correspondant à la pleine charge du moteur.

La température des gaz d'échappement est alors comprise entre deux limites qui peuvent être de l'ordre de 450 et 750°C. Dans ce cas, il n'est pas nécessaire d'ajouter un additif de recombustion des suies au carburant, puisque la température des gaz d'échappement est suffisante pour assurer une combustion spontanée des suies en présence d'oxygène. Le débit d'additif peut donc être maintenu à la valeur nulle.

Il est bien évident que les valeurs données dans le tableau ne sont qu'indicatives et que ces valeurs pourraient être modifiées, en fonction des conditions d'utilisation et des caractéristiques du moteur et du filtre à particules du véhicule.

De façon générale, plus la température des gaz d'échappement est élevée, moins il faudra ajouter d'additif dans le carburant injecté dans les cylindres du moteur.

Il est bien évident qu'on peut en particulier utiliser un plus grand nombre de plages de dosage de l'additif, de manière à réaliser un dosage plus fin, en fonction des conditions d'utilisation du véhicule.

Cependant, pour effectuer le dosage en additif, il faut tenir compte du fait que les mouvements de la pédale d'accélération du véhicule et donc du levier de charge de la pompe d'injection peuvent être très fluctuants et qu'il n'est pas souhaitable de modifier le dosage de l'additif à chaque mouvement de la pédale d'accélération et du levier de charge ou même à chaque fois que le mouvement du levier de charge se traduit par un franchissement d'une limite de zone telle que $V_1$ et $V_2$ détecté par le potentiomètre.

En outre, il faut tenir compte du fait qu'il existe, au moment d'un changement de dosage, un volume de gazole contenu dans la pompe d'injection 3 et dans la conduite de recirculation 9 sur laquelle est placé le dispositif de refroidissement 8 qui assure pendant un certain temps, l'alimentation du moteur avec du gazole renfermant une quantité d'additif correspondant à l'ancien dosage dont on a effectué le changement.

Par détermination de la valeur moyenne $V_M$ de la tension représentative du niveau de charge du moteur enregistrée pendant un temps $t_0$ et calculée par l'unité de traitement du boîtier électronique 12, cette tension moyenne étant représentée par les courbes 21 et 22 sur les figures 2 et 3 respectivement, permet de disposer d'un paramètre dont les fluctuations sont réduites par rapport à la valeur instantanée de la tension mesurée par le potentiomètre.

De plus, l'unité de traitement du boîtier électronique 12 effectue une comparaison de la tension moyenne aux tensions telles que $V_1$ et $V_2$ déterminant les limites de zone pendant un temps $T$ équivalent à un multiple de $t_0$.

Dans un cas d'application pratique, tel que représenté sur la figure 3, le temps $T$ a été fixé à une valeur égale à dix foix $t_0$.

Un signal de commande est transmis par le boîtier électronique 12 au module de commande d'admission de l'injecteur 16, afin de modifier le débit d'alimentation en additif de l'injecteur 16 dans le cas où la valeur de la tension moyenne $v_M$ se trouve constamment dans le nouvel intervalle correspondant à une nouvelle zone de charge du moteur, après franchissement de la valeur limite, pendant la durée $T$.

Dans le cas de fonctionnement du moteur représenté sur la figure 3, le niveau de charge du moteur se traduit par une tension comprise entre $V_2$ et $V_1$, jusqu'à l'instant $t_1$. Ce niveau de charge correspond à une circulation du véhicule sur route à vitesse modérée, la température des gaz d'échappement autorisant un dosage moyen en additif correspondant à un débit d'injection d'additif par l'injecteur 16 dans la conduite d'aspiration 5 égal à $d_M/2$.

La partie médiane de la figure 3 est un diagramme représentatif du débit d'additif injecté dans le circuit d'injection du moteur et la partie inférieure de la figure 3 est un diagramme représentatif de la concentration réelle en additif dans le circuit d'injection et en particulier dans la pompe d'injection 3.

Avant l'instant $t_1$, le moteur fonctionne de manière continue à un niveau de charge moyen, si bien que le débit d'additif introduit dans le circuit d'injection est maintenu à la valeur constante $d_M/2$. Un fonctionnement d'une durée suffisante à un niveau de charge moyen du moteur avant l'instant $t_1$ a permis d'obtenir une concentration réelle en additif dans la pompe égale à une valeur constante $c_M/2$ qui correspond à la concentration nécessaire pour obtenir une recombustion satisfaisante des suies dans le filtre à particules et qui est obtenue par injection du débit d'additif $d_M/2$ dans le carburant circulant dans la conduite d'aspiration 5.

A l'instant $t_1$, la valeur moyenne $v_M$ de la tension du potentiomètre passe d'une valeur supérieure à $V_1$ à une valeur inférieure à $V_1$. Cette variation du niveau de charge du moteur peut correspondre à un changement des conditions de circulation du véhicule qui passe d'une circulation sur route à une circulation en zone urbaine.

La valeur moyenne $V_M$ de la tension du potentiomètre représentative du niveau de charge du moteur se maintient en-dessous de la valeur $V_1$ pendant une durée qui peut être importante et qui est supérieure à $T = 10\ t_0$ (voir courbe 22 sur la figure 3).

L'unité de traitement du module électronique 12 effectue une comparaison de chacune des valeurs $V_M$ calculées pendant un intervalle de temps $t_0$ à la suite du franchissement de la valeur $V_1$ à l'instant $t_1$, à la valeur $V_1$ dont on a repéré le franchissement.

Après un intervalle de temps $T$ égal $10\ t_0$, pendant lequel dix valeurs de $V_M$ se sont avérées inférieures à $V_1$, le module de commande du boîtier électronique 12 envoie un signal de commande au module de commande d'admission de l'injecteur 16, de manière à faire passer le débit d'additif injecté dans la conduite d'admission 5, de la valeur $d_M/2$ à la valeur $d_M$.

Sur le diagramme de la partie centrale de la figure 3, cette modification du dosage de l'additif se traduit par un passage du débit d'additif de la valeur constante $d_M/2$ maintenue jusqu'à l'instant $t_1 + T$, à la valeur constante $d_M$.

La pompe d'injection 3 renferme alors une certaine quantité de gazole dont la concentration en additif est égale à $c_M/2$.

L'introduction d'additif dans la conduite d'aspiration 5 de la pompe 3 à un débit $d_M$ ainsi que l'injection du carburant contenu dans la pompe dans les cylindres du moteur font passer la concentration réelle en additif dans la pompe 3 de la valeur $c_M/2$ à la valeur $c_M$ pendant la durée $T'$ après l'instant $t_1 + T$ auquel est effectué le changement de dosage.

Le carburant injecté dans les cylindres du moteur ne présente la concentration voulue en additif $c_M$ qu'à l'instant $t_1 + T + T'$.

Pendant le temps $T + T'$, après l'instant $t_1$ correspondant au franchissement de la valeur $V_1$, le moteur consomme un carburant dont la teneur en additif est inférieure à la teneur souhaitable.

Il en résulte un fonctionnement du filtre à particules, dans des conditions qui ne sont pas totalement satisfaisantes, pendant une durée limitée.

Dans le cas d'un changement de régime du moteur se traduisant par une diminution du niveau de charge et nécessitant une augmentation de la concentration en additif dans le carburant, le temps $T$ pendant lequel le changement de dosage est différé doit être le plus court possible.

Au contraire, dans le cas d'un changement de régime du moteur se traduisant par une augmentation du niveau de charge et nécessitant une diminution de la concentration d'additif dans le carburant, il est possible d'envisager un fonctionnement avec une quantité d'additif excessive dans le carburant, pendant un temps plus long. En effet, le filtre à particules fonctionne alors dans des conditions tout-à-fait satisfaisantes et son colmatage par les particules d'oxyde provenant de la décomposition de l'additif dans les cylindres peut être limité dans la mesure où le temps de fonctionnement avec une quantité d'additif excessive est lui-même limité.

Il peut donc être souhaitable d'utiliser un temps $T$ différent, suivant le sens du changement de dosage souhaité.

Il est bien évident que dans le cas d'un franchissement de la limite $V_1$ tel que $V_M$ devienne supérieur à $V_1$, on contrôlera pendant un temps $T$, la présence de $V_M$ entre les limites $V_1$ et $V_2$, avant d'effectuer un changement de dosage de l'additif faisant passer son débit de la valeur $d_M$ à la valeur $d_M/2$.

Dans le cas d'un franchissement de la valeur $V_2$ dans le sens d'une augmentation, on vérifiera que VM reste supérieure à $V_2$ pendant une durée $T$, avant de faire passer le débit d'additif injecté de la valeur $d_M/2$ à la valeur 0.

Dans le cas d'un franchissement par $V_M$ de la valeur $V_2$ dans le sens d'une diminution, on contrôlera la présence de $V_M$ entre les valeurs $V_1$ et $V_2$, pendant un temps $T$, avant de faire passer le débit d'additif injecté dans le carburant de la valeur 0 à la valeur $d_M/2$.

Le procédé suivant l'invention permet donc d'adapter la quantité ou le débit d'additif injecté au niveau de charge du moteur, de sorte qu'en particulier, on limite le colmatage d'un filtre à particules par les oxydes formés à partir de l'additif, à l'intérieur des cylindres du moteur.

Le procédé suivant l'invention peut être mis en oeuvre de manière à éviter de modifier constamment le dosage d'additif tout en assurant une adaptation satisfaisante de la concentration en additif du carburant, au niveau de charge du moteur.

L'invention ne se limite pas au mode de réalisation qui a été décrit.

C'est ainsi qu'il est possible d'envisager un nombre de zones de dosage de l'additif supérieur à trois et même d'envisager une variation continue du dosage de l'additif, en fonction du niveau de charge du moteur.

Même dans le cas d'une variation continue du dosage en fonction du niveau de charge, il est possible d'envisager une temporisation des changements de dosage nécessaires, après un changement du niveau de puissance du moteur. Il est de même possible de ne prendre en compte que des variations du niveau de charge supérieures à une certaine limite pour effectuer les changements de dosage d'additif correspondants.

Le signal représentatif du niveau de charge du moteur peut être obtenu sous une forme différente d'une tension électrique aux bornes d'un potentiomètre.

Le recyclage du carburant dans le circuit d'injection peut être effectué par des moyens différents de ceux qui ont été décrits, ces moyens étant constitués par une conduite sur laquelle est placé un dispositif de refroidissement. Cependant, ces moyens de recyclage du carburant dans le circuit d'injection en aval de la pompe sont nécessaires, dans la mesure où le carburant renferme une certaine quantité d'additif et qu'il n'est pas souhaitable de recycler ce carburant dans le réservoir qui doit contenir du carburant non pollué par de l'additif.

Il est en effet essentiel que le réservoir dans lequel on aspire le carburant ne renferme aucune quantité d'additif, ce qui risquerait de perturber le dosage ultérieur dans la conduite d'aspiration de la pompe.

Des paramètres de fonctionnement du moteur autres que le niveau de charge peuvent être pris en compte et traités sous forme de signaux dans le boîtier électronique, pour déterminer le débit d'additif à introduire dans le conduit d'aspiration de la pompe d'injection. On peut par exemple prendre en compte la température de l'additif dans le réservoir 14, pour déterminer le débit d'additif à introduire dans le carburant.

On peut également introduire dans le boîtier élecronique, comme données d'entrée, différentes valeurs du débit d'injection de l'additif, en fonction du niveau de charge du moteur ; ces valeurs peuvent être fonctions de la nature et de la concentration de l'additif.

L'injecteur utilisé pour l'introduction de l'additif dans la conduite d'aspiration de la pompe peut être d'un type quelconque ; il est cependant avantageux d'utiliser un injecteur d'un type classique tel qu'un injecteur pour moteur à essence à injection.

Bien que l'invention s'applique de manière préférentielle à un moteur à allumage par compression utilisé pour la propulsion d'un véhicule dont la ligne d'échappement comporte un filtre à particules, l'additif étant alors constitué par un composé favorisant la recombustion des suies dans le filtre à particules, il est également possible d'envisager des applications du procédé et du dispositif suivant l'invention pour introduire un additif de nature quelconque dans le carburant d'un moteur à allumage par compression.

## Revendications

1. Procédé d'introduction d'un additif en quantité dosée dans le circuit d'injection (2) d'un moteur à allumage par compression (1) d'un véhicule automobile comportant une pompe d'injection de carburant (3) dans les cylindres du moteur (1) reliée à un réservoir de carburant (4) par une conduite d'aspiration (5) et un moyen de réglage (10) du niveau de charge du moteur, procédé dans lequel, pendant le fonctionnement du moteur (1), on injecte de manière automatique, dans la conduite d'aspiration (5) du circuit d'injection (2), des quantités d'additif déterminées en fonction du niveau de charge du moteur (1), caractérisé par le fait qu'on mesure en continu un paramètre représentatif du niveau de charge du moteur (1), qu'on calcule la valeur moyenne du paramètre pendant un intervalle de temps élémentaire $t_0$, qu'on compare les valeurs moyennes calculées du paramètre pendant des intervalles de temps élémentaire $t_0$ successifs à au moins une valeur limite prédéterminée $V_1$, $V_2$ du paramètre et qu'on injecte l'additif dans la conduite d'aspiration (5) du circuit d'injection (2), à un débit déterminé en fonction du résultat de la comparaison.

2. Procédé suivant la revendication 1, caractérisé par le fait qu'on compare les valeurs moyennes du paramètre calculé pendant des intervalles de temps élémentaires $t_0$ successifs à au moins une valeur prédéterminée $V_1$, $V_2$ du paramètre et qu'on modifie le débit d'injection d'additif, après un franchissement d'une des valeurs limites $V_1$, $V_2$ par la valeur moyenne du paramètre calculé, lorsque cette valeur moyenne reste constamment inférieure ou supérieure à la valeur limite dont on a enregistré le franchissement, pendant un intervalle de temps déterminé T égal à un multiple de l'intervalle de temps élémentaire $t_0$.

3. Procédé suivant la revendication 2, caractérisé par le fait qu'on définit trois zones d'utilisation du moteur délimitées par une première valeur limite $V_1$ et par une seconde valeur limite $V_2$ supérieure à $V_1$ du paramètre représentatif du niveau de charge du moteur, qu'on compare la valeur moyenne du paramètre à la valeur limite $V_1$, après un franchissement de cette valeur $V_1$, dans le sens d'une décroissance, qu'on compare la valeur moyenne $V_M$ du paramètre à la valeur limite $V_2$, après un franchissement de cette valeur $V_2$ par la valeur moyenne du paramètre dans le sens d'une augmentation et qu'on compare la valeur $V_M$ aux valeurs limites $V_1$ et $V_2$, après un franchissement de la valeur limite $V_1$ dans le sens d'une augmentation et de la valeur limite $V_2$, dans le sens d'une décroissance.

4.  Procédé suivant la revendication 3, caractérisé par le fait que les trois zones d'utilisation du moteur correspondent à une circulation du véhicule automobile propulsé par le moteur en zone urbaine, sur route et sur autoroute respectivement.

5.  Procédé suivant l'une quelconque des revendications 1 à 4, caractérisé par le fait que le paramètre représentatif du niveau de charge du moteur est une tension électrique mesurée aux bornes d'un potentiomètre associé à un levier de charge (10) de la pompe d'injection (3) du moteur.

6.  Dispositif d'introduction d'un additif en quantité dosée dans le circuit d'injection (2) d'un moteur à allumage par compression (1) d'un véhicule automobile comportant une pompe d'injection de carburant (3) dans les cylindres du moteur (1) reliée à un réservoir de carburant (4) par une conduite d'aspiration (5) et un moyen de réglage (10) du niveau de charge du moteur (1), intégré au véhicule et comportant un réservoir d'additif sous forme liquide (14), un moyen d'injection (16) de l'additif dans la conduite d'aspiration (5) reliée au réservoir d'additif et un boîtier électronique de calcul et de commande relié par un premier conducteur électrique (11) au moyen de réglage (10) du niveau de charge du moteur (1) et par un second conducteur électrique (18) à un moyen de commande d'admission d'additif dans le moyen d'injection (16), de manière à recevoir un signal représentatif du niveau de charge du moteur (1) et à transmettre un signal de commande au dispositif d'introduction d'additif en quantité dosée dans le circuit d'injection (2), caractérisé par des moyens pour mesurer en continu un paramètre représentatif du niveau de charge du moteur (1), et des moyens pour calculer la valeur moyenne du paramètre pendant un intervalle de temps élémentaire $t_0$, et des moyens pour comparer les valeurs moyennes calculées du paramètre pendant des intervalles de temps élémentaires $t_0$ successifs à au moins une valeur limite prédéterminée $V_1$, $V_2$ du paramètre et par des moyens pour injecter l'additif dans la conduite d'aspiration (5) du circuit d'injection (2), à un débit déterminé en fonction du résultat de la comparaison."

7.  Dispositif suivant la revendication 6, caractérisé par le fait que le moyen de réglage (10) du niveau de charge du moteur est constitué par un levier de charge auquel est associé un potentiomètre relié au boîtier électronique (12) par l'intermédiaire du premier conducteur électrique (11), de manière que le potentiomètre élabore et transmette au boîtier électronique (12), un signal de tension électrique représentatif du niveau de charge du moteur (1).

8.  Dispositif suivant l'une quelconque des revendications 6 et 7, caractérisé par le fait qu'il comporte de plus, une conduite (9) de recirculation de carburant reliée à la pompe d'injection (3) à l'une de ses extrémités et à la conduite d'aspiration (5) de la pompe (3) à son autre extrémité, de manière à réintroduire dans la conduite d'aspiration (5) les quantités excédentaires éventuelles de carburant et d'additif parvenant à la pompe (3) qui ne sont pas injectées dans les cylindres du moteur (1).

9.  Dispositif suivant la revendication 8, caractérisé par le fait qu'un dispositif de refroidissement de carburant (8) est disposé sur la conduite de recirculation (9).

**Patentansprüche**

1.  Verfahren zum Zuführen eines dosierten Zusatzmittels in den Einspritzkreislauf (2) eines Kraftfahrzeugmotors mit Kompressionszündung (1), der eine Pumpe zum Einspritzen von Kraftstoff (3) in die Zylinder des Motors (1), die durch eine Ansaugleitung (5) mit einem Kraftstofftank (4) verbunden ist, und ein Mittel zur Regelung (10) der Höhe der Motorlast aufweist, wobei beim Betrieb des Motors (1) automatisch Mengen an Zusatzmittel, die in Abhängigkeit von der Last des Motors (1) festgelegt werden, in die Ansaugleitung (5) des Einspritzkreislaufs (2) eingespritzt werden,
dadurch gekennzeichnet, daß ein Parameter, der die Höhe der Motorlast des Motors (1) aufzeigt, fortlaufend gemessen wird, daß der Durchschnittswert des Parameters für ein Grund-Zeitintervall $t_0$ berechnet

wird, daß die berechneten Durchschnittswerte des Parameters für aufeinanderfolgende Grund-Zeitintervalle $t_0$ mit mindestens einem festgesetzten Grenzwert $V_1$, $V_2$ des Parameters verglichen werden und das Zusatzmittel in einer Menge, die in Abhängigkeit von dem Ergebnis des Vergleichs bestimmt wird, in die Ansaugleitung (5) des Einspritzkreislaufs (2) eingespritzt wird.

2. Verfahren nach Anspruch 1,
dadurch gekennzeichnet, daß die Durchschnittswerte des berechneten Parameters für aufeinanderfolgende Grund-Zeitintervalle $t_0$ mit mindestens einem festgesetzten Wert $V_1$ , $V_2$ des Parameters verglichen werden und daß nach überschreiten eines der Grenzwerte $V_1$, $V_2$ durch den Durchschnittswert des berechneten Parameters die eingespritzte Zusatzmittelmenge verändert wird, wenn dieser Durchschnittswert während eines bestimmten Zeitintervalls T, das gleich einem Vielfachen des Grund-Zeitintervalle $t_0$ ist, konstant unter oder über dem Grenzwert bleibt, dessen Überschreitung erkannt wurde.

3. Verfahren nach Anspruch 2,
dadurch gekennzeichnet, daß drei Betriebsbereiche des Motors definiert werden, die von einem ersten Grenzwert $V_1$ und von einem über $V_1$ liegenden zweiten Grenzwert $V_2$ des Parameters, der die Höhe der Motorlast darstellt, abgegrenzt werden, daß der Durchschnittswert des Parameters nach einer Überschreitung des Werts $V_1$ im Sinne einer Verringerung mit dem Grenzwert $V_1$ verglichen wird, daß der Durchschnittswert $V_M$ des Parameters nach einer Überschreitung des Werts $V_2$ durch den Durchschnittswert des Parameters im Sinne einer Erhöhung mit dem Grenzwert $V_2$ verglichen wird, und daß der Wert $V_M$ nach einer Überschreitung des Werts $V_1$ im Sinne einer Erhöhung und des Grenzwerts $V_2$ im Sinne einer Verringerung mit den Grenzwerten $V_1$ und $V_2$ verglichen wird.

4. Verfahren nach Anspruch 3,
dadurch gekennzeichnet, daß die drei Betriebsbereiche des Motors einem Verkehr des von dem Motor angetriebenen Kraftfahrzeugs im Ortsgebiet, auf der Landstraße bzw. auf der Autobahn entsprechen.

5. Verfahren nach einem der Ansprüche 1 bis 4,
dadurch gekennzeichnet, daß der Parameter, der die Höhe der Motorlast darstellt, eine elektrische Spannung ist, die an den Klemmen eines mit einem Lasthebel (10) der Einspritzpumpe (3) des Motors verbundenen Potentiometers anliegt.

6. Vorrichtung zum Zuführen eines dosierten Zusatzmittels in den Einspritzkreislauf (2) eines Kraftfahrzeugmotors mit Kompressionszündung (1), der eine Pumpe zum Einspritzen von Kraftstoff (3) in die Zylinder des Motors (1), die durch eine Ansaugleitung (5) mit einem Kraftstofftank (4) verbunden ist, und ein Mittel zur Regelung (10) der Höhe der Motorlast des Motors (1) aufweist,
die im Fahrzeug eingebaut ist und einen Tank für flüssiges Zusatzmittel (14), ein Einspritzmittel (16) zum Einspritzen des Zusatzmittels in die Ansaugleitung (5), die mit dem Zusatzmitteltank verbunden ist, sowie eine Rechen- und Steuerelektronik aufweist, die durch einen elektrischen Leiter (11) mit dem Regelungsmittel (10) für die Höhe der Motorlast des Motors (1) und durch einen zweiten elektrischen Leiter (18) mit einem Steuerungsmittel der Zusatzmittelzufuhr in das Einspritzmittel (16) verbunden ist, so daß sie ein Signal empfängt, das die Höhe der Motorlast des Motors (1) angibt, und ein Steuersignal an die Vorrichtung zum Zuführen eines dosierten Zusatzmittels in den Einspritzkreislauf (2) überträgt,
gekennzeichnet durch Mittel zum fortlaufenden Messen eines Parameters, der die Höhe der Motorlast des Motors (1) aufzeigt, und durch Mittel zum Berechnen des Durchschnittswerts des Parameters für ein Grund-Zeitintervall $t_0$, und durch Mittel zum Vergleichen der berechneten Durchschnittswerte des Parameters für aufeinanderfolgende Grund-Zeitintervalle $t_0$ mit mindestens einem festgesetzten Grenzwert $V_1$, $V_2$ des Parameters, und durch Mittel zum Einspritzen des Zusatzmittels in einer Menge, die in Abhängigkeit von dem Ergebnis des Vergleichs bestimmt wird, in die Ansaugleitung (5) des Einspritzkreislaufs (2).

7. Vorrichtung nach Anspruch 6,
dadurch gekennzeichnet, daß das Regelungsmittel (10) für die Höhe der Motorlast aus einem Lasthebel besteht, an den ein Potentiometer angeschlossen ist, das über einen ersten elektrischen Leiter (11) mit der Elektronik (12) verbunden ist, so daß das Potentiometer ein elektrisches Signal, das die Höhe der Motorlast des Motors (1) angibt, erzeugt und an die Elektronik (12) überträgt.

8. Vorrichtung nach einem der Ansprüche 6 und 7,
dadurch gekennzeichnet, daß sie des weiteren eine Kraftstoffrezirkulationsleitung (9) umfaßt, die an einem ihrer Enden mit der Einspritzpumpe (3) und an ihrem anderen Ende mit der Ansaugleitung (5) der Pumpe (3) verbunden ist, so daß die möglichen überschüssigen Mengen Kraftstoff und Zusatzmittel, die zur Pumpe (3) gelangen und nicht in die Zylinder des Motors (1) eingespritzt werden, erneut in die Ansaugleitung (5) eingeführt werden.

9. Vorrichtung nach Anspruch 8,
dadurch gekennzeichnet, daß an der Rezirkulationsleitung (9) eine Kraftstoffkühlungsvorrichtung (8) angeordnet ist.


**Claims**

1. A process for introducing a measured amount of an additive into the injection circuit (2) of a compression ignition engine (1) of a motor vehicle comprising a pump for injecting fuel (3) into the cylinders of the engine (1), the pump being connected to a fuel tank (4) by a suction pipe (5) and a means (10) for regulating the charging level of the engine, in which process, while the engine (1) is running, quantities of additive determined as a function of the charging level of the engine (1) are injected automatically into the suction pipe (5) of the injection circuit (2),
characterised by the fact that a parameter representing the charging level of the engine (1) is measured continuously, that the average value of the parameter is calculated during an elementary period of time $t_0$, that the calculated average values of the parameter are compared, during successive elementary periods of time $t_0$, with at least one predetermined limiting value $V_1$, $V_2$ of the parameter and that the additive is injected into the suction pipe (5) of the injection circuit (2), at a rate determined as a function of the result of the comparison.

2. A process according to Claim 1, characterised by the fact that the average values of the parameter calculated during successive elementary periods of time $t_0$ are compared with at least one predetermined value $V_1$, $V_2$ of the parameter and that the additive injection rate is modified, after one of the limiting values $V_1$, $V_2$ is overstepped by the average value of the calculated parameter, when this average value remains constantly less or greater than the limiting value of which the overstepping has been recorded, during a given period of time T equal to a multiple of the elementary period of time $t_0$.

3. A process according to Claim 2, characterised by the fact that three usage zones of the engine are defined, delimited by a first limiting value $V_1$ and by a second limiting value $V_2$, greater than $V_1$, of the parameter representing the charging level of the engine, that the average value of the parameter is compared with the limiting value $V_1$, after this value $V_1$ is overstepped, in the direction of decrease, that the average value $V_M$ of the parameter is compared with the limiting value $V_2$, after this value $V_2$ is overstepped by the average value of the parameter in the direction of increase, and that the value $V_M$ is compared with the limiting values $V_1$ and $V_2$, after the limiting value $V_1$ is overstepped in the direction of increase and the limiting value $V_2$ is overstepped in the direction of decrease.

4. A process according to Claim 3, characterised by the fact that the three usage zones of the engine correspond to travel in the motor vehicle propelled by the engine in an urban area, on the open road and on the motorway, respectively.

5. A process according to any one of Claims 1 to 4, characterised by the fact that the parameter representing the charging level of the engine is an electric voltage measured at the terminals of a potentiometer combined with a charging lever (10) for the injection pump (3) of the engine.

6. A device for introducing a measured amount of an additive into the injection circuit (2) of the compression ignition engine (1) of a motor vehicle comprising a pump for injecting fuel (3) into the cylinders of the engine (1), the pump being connected to a fuel tank (4) by a suction pipe (5) and a means (10) for regulating the charging level of the engine (1), incorporated into the vehicle and comprising a reservoir for additive in liquid form (14), a means (16) for injecting the additive into the suction pipe (5) connected to the additive reservoir and an electronic calculation and control unit connected via a first electric conductor (11) to the means (10) for regulating the charging level of the engine (1) and by a second electric conductor (18) to a means for controlling the admission of additive into the injection means (16), so as to receive a signal representing the charging level of the engine (1) and to transmit a control signal to the device for introducing a measured amount of additive into the injection circuit (2),

characterised by means for continuously measuring a parameter representing the charging level of the engine (1), and means for calculating the average value of the parameter during an elementary period of time $t_0$, and means for comparing the average calculated values of the parameter during successive elementary periods of time $t_0$ with at least one predetermined limiting value $V_1$, $V_2$ of the parameter and by means for injecting the additive into the suction pipe (5) of the injection circuit (2), at a rate determined according to the result of the comparison.

7. A device according to Claim 6, characterised by the fact that the means (10) for regulating the charging level of the engine is constituted by a charging lever with which is combined a potentiometer connected to the electronic unit (12) through the intermediary of the first electric conductor (11), such that the potentiometer prepares and transmits to the electronic unit (12) an electric voltage signal representing the charging level of the engine (1).

8. A device according to any one of Claims 6 and 7, characterised by the fact that it further comprises a fuel recirculating pipe (9) connected to the injection pump (3) at one of its ends and to the suction pipe (5) of the pump (3) at its other end, so as to reintroduce into the suction pipe (5) any surplus quantities of fuel and additive reaching the pump (3) which are not injected into the engine cylinders (1).

9. A device according to Claim 8, characterised by the fact that a fuel cooling device (8) is arranged on the recirculating pipe (9).

FIG.1

EP 0 488 831 B1

FIG.2

FIG.3